Europäisches Patentamt

European Patent Office

Office européen des brevets

(19)

(11) Numéro de publication: **0 379 453**
**A1**

(12) **DEMANDE DE BREVET EUROPEEN**

(21) Numéro de dépôt: **90420028.4**

(22) Date de dépôt: **18.01.90**

(51) Int. Cl.⁵: **B22D 27/11, B29C 45/57**

(30) Priorité: **19.01.89 FR 8901304**

(43) Date de publication de la demande:
**25.07.90 Bulletin 90/30**

(84) Etats contractants désignés:
**AT BE CH DE ES GB GR IT LI LU NL SE**

(71) Demandeur: **ALUMINIUM PECHINEY**
**23, rue Balzac**
**F-75008 Paris Cédex 08(FR)**

(72) Inventeur: **Charbonnier, Jean**
**30 rue du Grand François**
**F-38140 Rives-sur Fure(FR)**
Inventeur: **Goliard, François**
**Le Vernay, Oyeu**
**F-38690 Le Grand Lemps(FR)**
Inventeur: **Rata, Guy**
**Le Fagot - Chirens**
**F-38850 Charavines(FR)**

(74) Mandataire: **Vanlaer, Marcel et al**
**PECHINEY 28, rue de Bonnel**
**F-69433 Lyon Cédex 3(FR)**

(54) Procédé d'obtention par moulage sous pression de pièces métalliques présentant des masses isolées compactes.

(57) L'invention est relative à un procédé d'obtention par moulage sous pression de pièces métalliques présentant des masses isolées compactes.

Ce procédé met en oeuvre un moule (31) formé d'une partie fixe (32) et d'une partie mobile (33) dont les faces adjacentes portent une empreinte (34), la partie fixe étant percée d'une ouverture (37) mettant en communication ladite empreinte avec un dispositif d'alimentation en métal au moins partiellement liquide et sous pression, une plaque d'éjection et éventuellement un vérin de forgeage caractérisé en ce que durant l'alimentation du moule, on transmet au moins une partie de l'énergie due à la pression exercée sur le métal à des obturateurs (41) mobiles qui coulissent dans des logements (40) pratiqués sur toute l'épaisseur de la paroi du moule et placés en regard des masses isolées (35), on récupère ladite énergie par compression de systèmes élastiques (42) solidaires desdits obturateurs et la restitue au métal par détente desdits systèmes au moment où la pression qui s'exerce sur le métal par l'intermédiaire de l'alimentation devient inférieure à la pression exercée par lesdits systèmes.

Ce procédé est aussi applicable à une matrice de thixoformage ou de forgeage liquide direct.

FIG.3

# PROCEDE D'OBTENTION PAR MOULAGE SOUS PRESSION DE PIECES METALLIQUES PRESENTANT DES MASSES ISOLEES COMPACTES

La présente invention est relative à un procédé d'obtention par moulage sous pression de pièces métalliques présentant des masses isolées compactes.

L'homme de l'art du moulage des pièces métalliques sait qu'une masse liquide de métal diminue de volume quand elle se solidifie. D'où la présence sur la plupart des moules d'un volume placé du côté de l'alimentation qui contient une réserve de métal, appelée masselotte ou encore pastille dans le moulage sous pression, destinée à compenser cette diminution ou retrait et à permettre l'obtention de pièces compactes, c'est-à-dire dépourvues de cavités internes ou retassures. Cette solution convient très bien quand les pièces coulées ont une forme relativement simple. Mais, dans la plupart des cas, le liquide d'alimentation pour atteindre l'empreinte du moule doit circuler à travers des canaux d'injection et des attaques et la compacité de la pièce dont dépend sa "santé" ne peut être assurée qu'à la condition d'avoir une solidification dirigée dans le sens pièce-attaque-canal-pastille, ce qui exige alors de réaliser le moule avec des attaques massives et des canaux de section importante et qui est pratiqué notamment dans le moulage sous pression du type "forgeage liquide".

Néanmoins, même lorsque cette disposition particulière est adoptée, le problème de la retassure subsiste dans le cas où la pièce présente des masses isolées c'est-à-dire des parties de volume relativement important adjacentes à des parties de volume beaucoup plus réduit. En effet, la vitesse de refroidissement étant alors très différente d'un point à l'autre de la pièce, du liquide subsiste encore au sein des masses isolées alors que la solidification est complète ailleurs et en raison de l'isolement de ce liquide, il est impossible de compenser le retrait qu'il entraînera par les moyens évoqués ci-dessus. C'est pourquoi, on adopte alors la solution consistant à exercer un effort de "forgeage" sur les masses isolées pendant la solidification, afin de remplacer les cavités internes dues au phénomène de retassure par une déformation externe de ces masses et assurer ainsi à la pièce la compacité souhaitée.

Cet effort de forgeage peut être obtenu en perçant une ouverture dans la paroi du moule en regard des masses isolées et en y logeant une partie mobile, que l'on déplace en appliquant une pression de manière à réaliser la déformation externe recherchée. Le déplacement de cette partie est assuré par l'intermédiaire d'un vérin hydraulique qui fait soit partie de la machine de moulage, soit lui est extérieur et peut être actionné par le groupe hydraulique de la machine ou par un groupe séparé.

Mais cette solution n'est utilisable sur le plan pratique que pour un nombre limité de masses isolées à forger car, comme le nombre de vérins doit être égal au nombre de masses, on arrive rapidement à un moule et à un cycle de marche très compliqués.

C'est pourquoi la demanderesse a cherché et trouvé un moyen simple de remédier au problème des retassures quel que soit le nombre de masses isolées présentées par la pièce coulée et ce, dans le cadre du moulage sous pression.

On entend ici par moulage sous pression toute opération visant à mettre une masse métallique sous forme d'une pièce par solidification dans un moule :
- d'une part en introduisant le métal sous pression dans le moule à l'aide d'un piston soit sous forme liquide (cas du moulage sous pression classique), soit sous forme semi-liquide (cas du thixoformage indirect), opération qui peut être accompagnée en cours de solidification d'un forgeage de la pièce au moyen d'un vérin qui exerce une pression sur les parois du moule (cas du forgeage liquide indirect)
- d'autre part, en introduisant le métal directement dans l'empreinte du moule et en soumettant la pièce au cours de la solidification à une opération de forgeage au moyen d'un vérin exerçant une pression sur les parois du moule, ledit métal étant à l'état liquide (cas du forgeage liquide direct) ou semi liquide (cas du thixoformage direct)
étant compris que le thixoformage qu'il soit direct ou indirect, se rapporte évidemment à l'utilisation d'alliages thixotropes, c'est-à-dire présentant une structure à dendrites dégénérées qui leur confère une aptitude particulière à la mise en forme.

Le moyen mis en oeuvre par la demanderesse dans son invention consiste dans le cas du moulage sous pression classique, du thixoformage indirect, du forgeage liquide indirect éventuellement accompagné d'un forgeage à l'aide d'un vérin auxiliaire, en un procédé d'obtention par moulage sous pression de pièces métalliques présentant des masses isolées compactes au moyen d'une machine comportant un moule formé d'une partie fixe et d'une partie mobile dont les faces adjacentes portent une empreinte, la partie fixe étant percée d'une ouverture mettant en communication ladite empreinte avec un dispositif d'alimentation en métal au moins partiellement liquide et sous pression, une plaque d'éjection et éventuellement un vérin de forgeage caractérisé en ce que durant l'alimentation du métal, on transmet au moins une partie de l'énergie due à la pression exercée sur le métal à des obturateurs mobiles qui coulissent dans des logements pratiqués sur toute l'épaisseur de la paroi du moule et placés en regard des masses isolées, on récupère ladite énergie par compression de systèmes élastiques solidaires desdits obturateurs et on la restitue au métal par détente desdits systèmes au moment où la pression qui s'exerce sur le métal par l'intermédiaire de l'alimentation devient inférieure à la pression exercée par lesdits systèmes.

Dans le cas du thixoformage ou du forgeage liquide direct, le moyen de l'invention consiste en un procédé d'obtention de pièces métalliques présentant des masses isolées compactes par moulage sous pression au moyen d'une machine comportant une matrice formée d'une partie fixe et d'une partie mobile dont les faces placées en regard portent une empreinte dans laquelle est placé un métal maintenu dans des conditions thermiques telles qu'il présente au moins partiellement une phase liquide, ladite machine étant également équipée d'un vérin de forgeage qui s'appuie sur la partie mobile de la matrice et tend a l'appliquer sur la partie fixe afin d'assurer la mise en forme du métal caractérisé en ce que l'on transmet au moins une partie de l'énergie due à la pression exercée sur le métal à des obturateurs mobiles qui coulissent dans des logements pratiqués sur toute l'épaisseur de la paroi du moule et placés en regard des masses isolées, on récupère ladite énergie par compression de systèmes élastiques solidaires desdits obturateurs et on la restitue au métal par détente desdits systèmes dès que la pression qui s'exerce sur le métal par l'intermédiaire de la partie mobile devient inférieure à la pression exercée par lesdits systèmes.

De façon plus détaillée, le fonctionnement des systèmes élastiques dans le cas du moulage sous pression classique ou du thixoformage indirect est le suivant :
- en position de repos, le système élastique est détendu et l'obturateur mobile se trouve en position haute; lors du remplissage de l'empreinte par le métal, la pression vient s'exercer sur l'obturateur qui s'élève, ce qui a pour effet de comprimer le système élastique;
- pendant la solidification, lorsque le volume de la masse isolée est entouré d'une croûte solide mince, la pression exercée sur le métal cesse d'être transmise à l'obturateur mais le système élastique tend à se détendre et exerce son effort sur l'obturateur de manière à le faire redescendre. Ainsi, bien que la pression hydraulique exercé sur le métal soit par l'alimentation, soit par le forgeage, ne puisse plus être transmise aux masses isolées, celles-ci continuent à subir un effort qui assure l'élimination des cavités internes et l'obtention de la compacité souhaitée.

Ce procédé est particulièrement efficace en thixoformage car la contraction volumique à la solidification est beaucoup plus faible que dans les procédés utilisant du métal complètement liquide. De ce fait, la course du système élastique est plus faible, ce qui facilite le maintien d'une pression élevée.

Ce procédé peut s'appliquer également en forgeage liquide ou thixoformage direct. Dans ce cas, l'obturateur actionné par le système élastique est placé dans la matrice de forgeage. Comme dans le cas précédent, la fermeture de la matrice exerce une pression sur cet obturateur comprimant ainsi le système élastique qui exerce ensuite son effort lorsque la solidification des parties minces empêche la partie supérieure de la matrice de se déplacer pour compenser la contraction volumique de la masse isolée.

En somme, l'invention consiste à utiliser l'énergie développée par la mise en forme pour obtenir des pièces compactes. On conçoit l'intérêt d'un tel procédé qui évite tout recours à une énergie extérieure comme c est le cas dans le dispositif de l'art antérieur et a également l'avantage de ne compliquer que très faiblement la réalisation du moule et de n'avoir aucune incidence ni sur la machine, ni sur le cycle de fonctionnement.

Les systèmes élastiques peuvent être constitués par tout moyen connu tel que par exemple la rondelle déformable (rondelle Belleville), le ressort hélicoïdal et le cylindre hydropneumatique.

Quant à la position des systèmes élastiques sur la machine, elle peut être conçue de trois manières différentes :
- soit ils sont incorporés dans la paroi du moule ou de la matrice,
- soit ils sont fixés sur la plaque d'éjection du moule, dispositif existant sur la plupart des moules sous pression et qui permet de sortir plus facilement les pièces de leur empreinte. Le fonctionnement du système est identique au cas précédent mais il a l'avantage lors de chaque démoulage de pouvoir utiliser l'obturateur comme éjecteur, ce qui a un effet de nettoyage et élimine les particules métalliques qui pourraient s'infiltrer dans le logement dudit obturateur et bloquer son mouvement lors de l'opération suivante
- soit ils sont placés sur le vérin de forgeage dans le cas d'une machine de forgeage liquide. Cela a l'avantage de permettre par l'intermédiaire des systèmes élastiques de pouvoir absorber les différences de déplacement des obturateurs dues au fait que les masses isolées ne se solidifient pas toutes à la même vitesse. La pression peut continuer alors à s'exercer sur chacune d'elles alors qu'en l'absence de systèmes élastiques seule la masse qui se contracte le moins subirait l'effort de forgeage.

Cette disposition permet également d'exercer sur les masses une pression supérieure à la pression d'alimentation, d'avoir une course des obturateurs qui n'est pas limitée et de pouvoir appliquer la pression au moment où on le souhaite.

L'invention sera mieux comprise à l'aide des figures ci-jointes qui représentent :

- selon l'art antérieur :

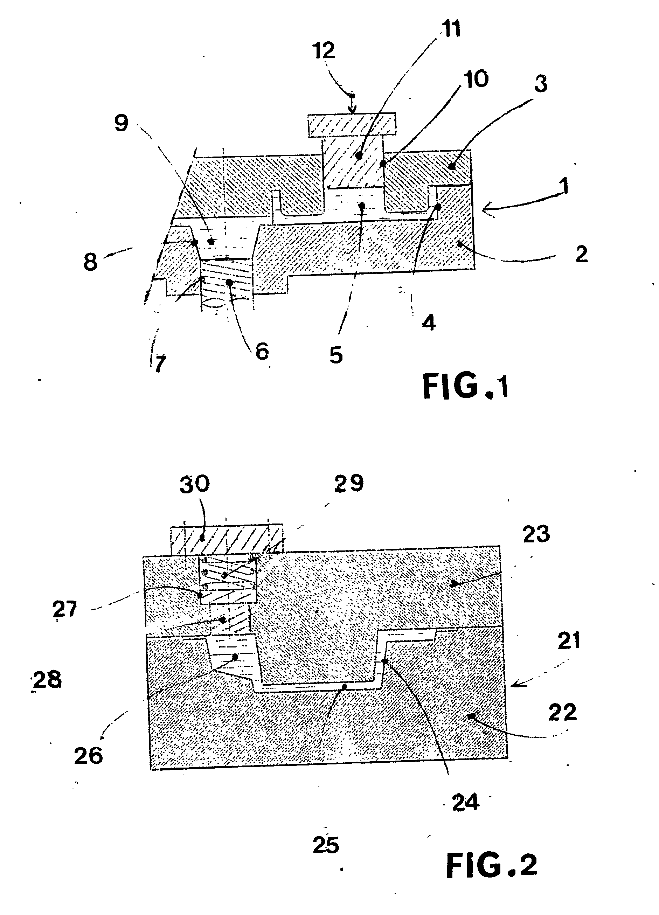

    fig. 1, une partie d'une coupe par un plan vertical passant par le dispositif d'alimentation d'un moule dont la paroi est équipée d'une partie mobile.

- selon l'invention :

    . fig. 2, une vue en coupe par un plan vertical d'un moule de thixoformage direct dont la paroi est équipée d'un système élastique

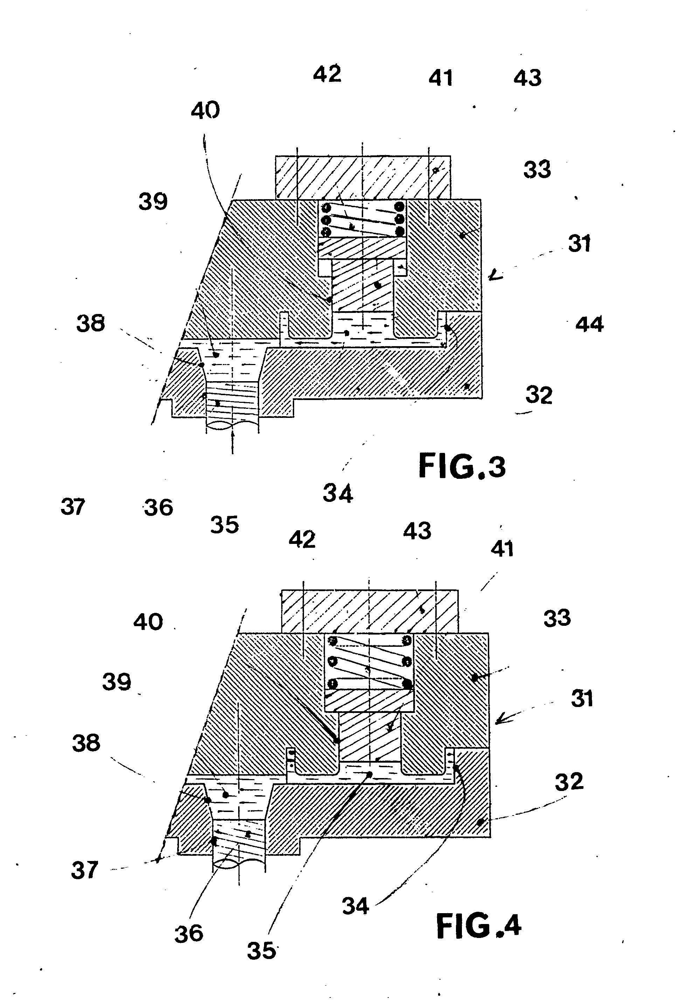

    . fig. 3 et 4, une partie d'une coupe par un plan vertical passant par le dispositif d'alimentation d'un moule de moulage sous pression dont la paroi est équipée d'un système élastique; la fig.3 correspond à la phase de compression du système et la fig.4 à la phase de détente

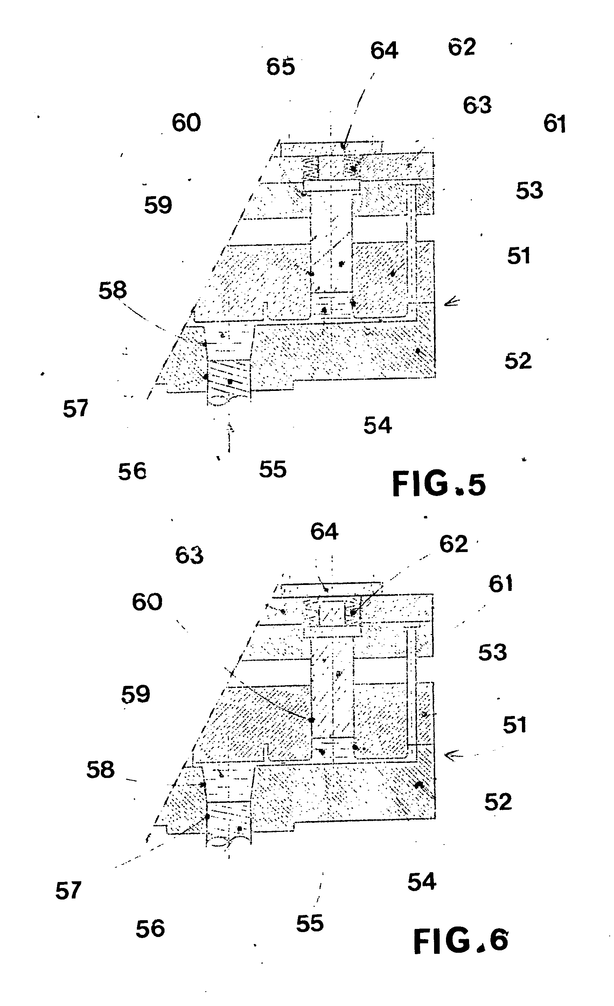

    . fig. 5 et 6, une partie d'une coupe par un plan vertical passant par le dispositif d'alimentation d'un moule de moulage sous pression comportant une plaque d'éjection dans laquelle est monté un système élastique; la fig.5 correspond à la phase de compression du système et la fig.6 à la phase de détente

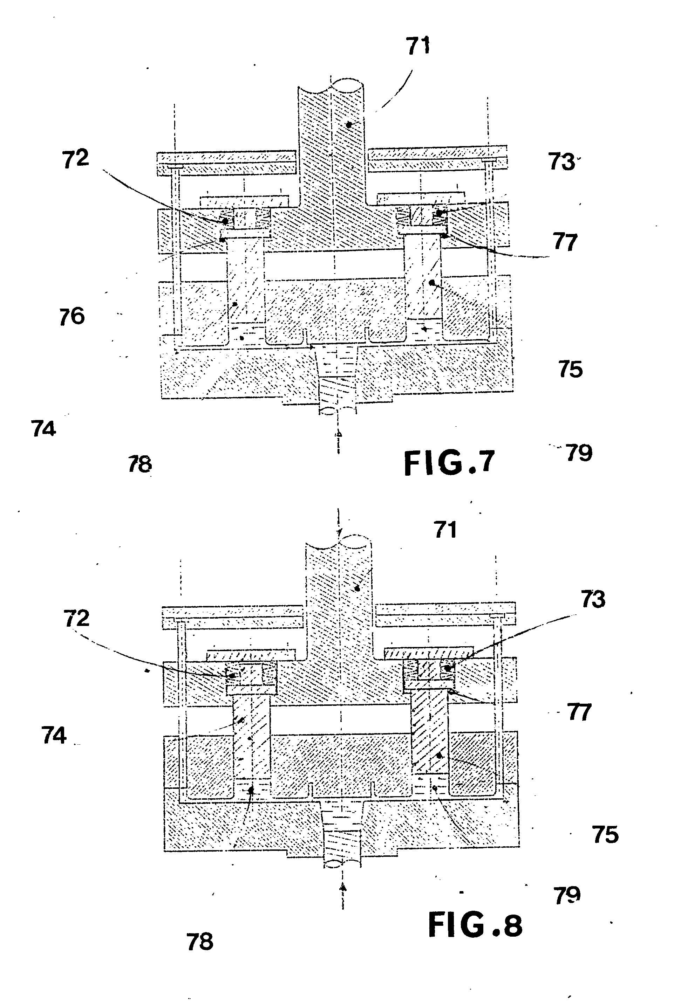

    . fig. 7 et 8, une coupe par un plan vertical passant par le dispositif d'alimentation d'un moule de moulage sous pression comportant une plaque d'éjection et un vérin de forgeage dans lequel est monté un système élastique; la fig. 7 correspond à la phase de compression du système et la fig.8 à la phase de détente.

De manière plus détaillée, on distingue :

- sur la fig. 1, un moule 1 formé d'une partie fixe 2 et d'une partie mobile 3 dont les faces adjacentes portent une empreinte 4 ayant un contour qui permet le moulage d'une pièce présentant une masse isolée 5 à partir d'un métal liquide admis sous pression dans le moule à l'aide d'un piston 6 par l'intermédiaire d'une ouverture 7 percée dans la partie fixe du moule et qui forme un espace 8 dans lequel se solidifie la pastille 9. La partie mobile du moule est équipée d'un logement 10 dans lequel coulisse une partie mobile 11 qui sous l'action d'une pression exercée suivant la direction 12 vient comprimer la partie de la pièce formant la masse isolée après solidification partielle du métal afin de supprimer les cavités internes qui se sont formées.

- sur la fig. 2, une matrice 21 formée d'une partie fixe 22 et d'une partie mobile 23 dont les faces en regard portent une empreinte 24 dans laquelle a été placée une billette d'un métal thixotrope qui par chauffage a donné un matériau semi-liquide 25 dont la mise sous forme d'une pièce présentant une masse isolée 26 est réalisée par application sur la partie mobile du moule au moyen d'un vérin non représenté d'une pression destinée à la rapprocher de la partie fixe. En regard de la masse isolée, la partie mobile du moule est percée d'un logement 27 à l'intérieur duquel coulisse un obturateur mobile 28 solidaire d'un système élastique 29 maintenu en place par une butée 30. Lors du rapprochement des deux parties du moule sous l'action du vérin, le matériau semi liquide placé dans l'empreinte est comprimé : l'énergie qu'il reçoit ainsi est transmise au moins en partie à l'obturateur pour être récupérée par compression du système élastique.

Dès que la pression exercée par le matériau sous l'effet du rapprochement devient inférieure à la pression que peut exercer le système par détente, ce qui se produit notamment au cours de la solidification du fait du retrait du métal, l'énergie emmagasinée par ledit système est restituée à l'obturateur qui repousse la portion de matériau avec lequel il est en contact et tend ainsi à faire disparaître les cavités internes qui se sont développées en son sein au cours de la solidification.

- sur les fig. 3 et 4, un moule 31, formé d'une partie fixe 32 et d'une partie mobile 33 dont les faces adjacentes portent une empreinte 34 permettant le moulage d'une pièce présentant une masse isolée 35 à partir d'un métal liquide admis sous pression dans le moule à l'aide d'un piston 36 par l'intermédiaire d'une ouverture 37 percée dans la partie fixe du moule et qui forme un espace 38 dans lequel se solidifiera une pastille 39 après remplissage du moule. La paroi de la partie mobile du moule est équipée d'un logement 40 dans lequel coulisse un obturateur 41 qui est solidaire d'un système élastique 42 maintenu en place au moyen d'une butée 43.

Lors de l'alimentation du moule, l'énergie due à la pression exercée par le métal est transmise à l'obturateur qui coulisse vers le haut et vient comprimer le système élastique qui récupère ladite énergie comme on peut le voir sur la fig.3 avec la formation d'un espace annulaire 44 entre l'obturateur et le bas de son logement. Après solidification partielle du métal et dès que la pression exercée par le piston devient inférieure à la pression que peut développer le système élastique par détente, ce dernier restitue l'énergie emmagasinée en repoussant l'obturateur vers le bas sur une hauteur correspondant à celle de l'espace annulaire 44, ce qui a pour effet de déformer la surface du métal en cet endroit et de refermer les cavités internes qui se sont formées lors de la solidification.

- sur les fig. 5 et 6, un moule 51 formé d'une partie fixe 52 et d'une partie mobile 53 dont les faces adjacentes portent une empreinte 54 permettant le moulage d'une pièce présentant une masse isolée 55 à partir d'un métal liquide admis sous pression dans le moule à l'aide d'un piston 56 par l'intermédiaire d'une ouverture 57 percée dans la partie fixe du moule et qui forme un espace 58 dans lequel se solidifiera une pastille 59 après remplissage du moule. La partie mobile du moule est équipée d'un logement 60 placé en regard de la masse isolée et dans laquelle coulisse un obturateur 61 qui est solidaire d'un système élastique 62 placé dans la plaque d'extraction 63 du moule et maintenu en place par une butée 64.

En dehors du fait que le système élastique est ici placé non dans la paroi du moule, mais dans la plaque d'extraction, son fonctionnement est identique à celui décrit par les fig. 3 et 4 : lors de l'alimentation du moule, l'obturateur coulisse vers le haut et laisse apparaître suivant la fig. 5 un espace annulaire 65 au bas de son logement. Cet espace sera occupé à nouveau par l'obturateur lors de la détente du système élastique (cf fig.6).

- sur les fig. 7 et 8, on retrouve les mêmes éléments que ci-dessus mais auxquels s'ajoute le vérin de forgeage 71 dans lequel sont incorporés les systèmes élastiques 72 et 73.

Lors de l'alimentation du moule en métal, les obturateurs mobiles 74 et 75 coulissent vers le haut et laissent apparaître les espaces annulaires 76 et 77 en bas de leur logement tandis qu'ils transmettent aux systèmes élastiques l'énergie due à la pression sur le métal (cf fig.7).

Lors de la solidification du métal, la contraction de la masse isolée 78 étant dans le cas présent plus importante que celle de la masse 79, la pression exercée sur le système élastique 72 va s'affaiblir plus rapidement que celle exercée sur le système 73, d'où une restitution précoce de l'énergie de compression à l'obturateur 74 qui réoccupe l'espace annulaire 76 et exerce sa pression sur le métal tout en supprimant les cavités internes tandis que l'espace 77 subsiste.

Cela permet au vérin de forgeage de maintenir un effet de compression sur toute la pièce en dépit des différences de contraction liées à chacune des masses isolées.

L'invention trouve son application dans tous les procédés d'obtention par moulage sous pression, thixoformage ou forgeage liquide de pièces présentant des masses isolées ayant une compacité convenable.

## Revendications

1. Procédé d'obtention par moulage sous pression de pièces métalliques présentant des masses isolées compactes au moyen d'une machine comportant un moule (31,51) formé d'une partie fixe (32,52) et d'une partie mobile (33,53) dont les faces adjacentes portent une empreinte (34,54), la partie fixe étant percée d'une ouverture (37,57) mettant en communication ladite empreinte avec un dispositif d'alimentation en métal au moins partiellement liquide et sous pression, une plaque d'éjection (63) et éventuellement un vérin de forgeage (71), caractérisé en ce que durant l'alimentation du moule, on transmet au moins une partie de l'énergie due à la pression exercée sur le métal à des obturateurs (41,61,75) mobiles qui coulissent dans des logements (40,60) pratiqués sur toute l'épaisseur de la paroi du moule et placés en regard des masses isolées (35,55,79), on récupère ladite énergie par compression de systèmes élastiques (42,62,73) solidaires desdits obturateurs et la restitue au métal par détente desdits systèmes au moment où la pression qui s'exerce sur le métal par l'intermédiaire de l'alimentation devient inférieure à la pression exercée par lesdits systèmes.

2. Procédé d'obtention par moulage sous pression de pièces métalliques présentant des masses isolées compactes au moyen d'une machine comportant une matrice (21) formée d'une partie fixe (22) et une partie mobile (23) dont les faces placées en regard portent une empreinte (24) dans laquelle est placé un métal maintenu dans des conditions thermiques telles qu'il présente au moins partiellement une phase liquide, ladite machine étant également équipée d'un vérin de forgeage qui s'appuie sur la partie mobile de la matrice et tend à l'appliquer sur la partie fixe, afin d'assurer la mise en forme du métal, caractérisé en ce que l'on transmet au moins une partie de l'énergie due à la pression exercée sur le métal à des obturateurs (28) mobiles qui coulissent dans des logements (27) pratiqués sur toute l'épaisseur de la paroi du moule et placés en regard des masses isolées (26), on récupère ladite énergie par compression de systèmes élastiques (29) solidaires desdits obturateurs et la restitue au métal par détente desdits systèmes dès que la pression qui s'exerce sur le métal par l'intermédiaire de la partie mobile devient inférieure à la pression exercée par lesdits systèmes.

3. Procédé selon les revendications 1 et 2 caractérisé en ce que les systèmes élastiques appartiennent au groupe constitué par la rondelle déformable, le ressort hélicoïdal, le cylindre hydropneumatique.

4. Procédé selon les revendications 1 et 2, caractérisé en ce que les systèmes élastiques sont fixés sur la paroi du moule ou de la matrice.

5. Procédé selon la revendication 1 caractérisé en ce que les systèmes élastiques sont fixés sur la plaque d'éjection.

6. Procédé selon la revendication 1 caractérisé en ce que les systèmes élastiques sont fixés sur le vérin de forgeage.

**FIG.1**

**FIG.2**

FIG.3

FIG.4

FIG.5

FIG.6

71

72

73

77

76

75

74

78

**FIG.7**

79

71

72

73

74

77

75

78

79

**FIG.8**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN, vol. 7, no. 230 (M-249)[1375], 12 octobre 1983; & JP-A-58 122 835 (TATEISHI DENKI K.K.) 21-07-1983 * Résumé * --- | 1,5 | B 22 D 27/11 B 29 C 45/57 |
| X | PATENT ABSTRACTS OF JAPAN, vol. 8, no. 253 (M-339)[1690], 20 novembre 1984; & JP-A-59 127 740 (SHIYAAPU SEIKI K.K.) 23-07-1984 * Résumé * --- | 1,4 | |
| X | US-A-2 781 547 (S.K. MOXNESS) * Colonne 2, lignes 30-49 * --- | 1,4 | |
| X | DE-C- 654 267 (H. HOLLNACK) * Page 3, lignes 57-87 * | 2,4 | |
| A | --- | 6 | |
| A | DE-C- 868 494 (OTTO FUCHS KG) * Page 2, lignes 98-105 * ----- | 2 | |
| | | | **DOMAINES TECHNIQUES RECHERCHES (Int. Cl.5)** |
| | | | B 22 D B 29 C |

**Le présent rapport a été établi pour toutes les revendications**

| Lieu de la recherche | Date d'achèvement de la recherche | Examinateur |
|---|---|---|
| LA HAYE | 11-04-1990 | DOUGLAS K.P.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P0402)